Europäisches Patentamt

European Patent Office

Office européen des brevets

(19)

(11) Veröffentlichungsnummer: **0 361 026**
**A1**

## (12) EUROPÄISCHE PATENTANMELDUNG

(21) Anmeldenummer: **89114057.6**

(22) Anmeldetag: **29.07.89**

(51) Int. Cl.5: **F16C 29/02**

(30) Priorität: **17.09.88 DE 3831676**
**31.05.89 DE 3917673**

(43) Veröffentlichungstag der Anmeldung:
**04.04.90 Patentblatt 90/14**

(84) Benannte Vertragsstaaten:
**CH DE FR GB IT LI**

(71) Anmelder: **INA LINEAR TECHNIK OHG**
**Hasenecker Strasse**
**D-6650 Homburg/Saar(DE)**

(72) Erfinder: **Schneider, Joachim**
**Haydnstrasse 52**
**D-4000 Düsseldorf 13(DE)**
Erfinder: **Stötzel, Gilbert**
**Benrather Schlossufer 65a**
**D-4000 Düsseldorf(DE)**
Erfinder: **Führmann, Jörg**
**Hopfenleithe 21**
**D-8521 Weisendorf(DE)**

(74) Vertreter: **Harwardt, Günther, Dipl.-Ing.**
**HARWARDT NEUMANN PATENTANWÄLTE**
**Scheerengasse 2 Postfach 1455**
**D-5200 Siegburg 2(DE)**

(54) Hydrostatische Lagerung.

(57) Die Erfindung betrifft eine hydrostatische Lagerung, die eine vielfältige Anpassungsmöglichkeit an verschiedene Einsatzfälle erlaubt. Dabei ist die eigentliche Führung und Lagerung Führungsschienen 3 und separaten Tragelementen 5 zugeordnet, welche gesonderte Lagerelemente 6 aufweisen. Die gesondert hergestellten Lagerelemente 6 haben Drucktaschen 13, 13a, die mit Druckmittel beaufschlagbar sind, wodurch eine verbilligte Herstellung und eine bessere Anpassung an die erforderlichen Spielverhältnisse zur Erzielung einer hohen Tragfähigkeit ermöglicht wird

Fig. 7

## Hydrostatische Lagerung

Die Erfindung betrifft eine hydrostatische Lagrung zur Aufnahme von horizontalen und/oder vertikalen Lagerkräften für einen entlang einer Führungsschiene bewegbaren Schlitten, dem mindestens ein separates Lagerelement zugeordnet ist, das mit zumindest einer Drucktasche versehen ist, welche der Führungsfläche der Führungsschiene zugewandt und mit einer Druckmittelleitung verbunden ist, welche über Leitungen von einer Druckquelle mit Druckmittel versorgbar ist.

Bei hydrostatischen Lagerungen ist es bekannt, an den zur Führung entlang einer Führungsschiene vorgesehenen Schlitten Aufnahmeböcke anzuformen in denen Bohrungen zur Aufnahme von Drucktaschen aufweisenden Büchsen angebracht sind. Die Führungsschienen sind als runde Stangen ausgebildet. Die Druckmittelkanäle sind in dem Schlitten vorgesehen. (US-PS 4506935).

Ferner ist es bei hydrostatischen Lagerungen bekannt, in den zur Führung entlang einer Führungsschiene vorgesehenen Schlitten die Drucktaschen einzuarbeiten und die Druckmittelkanäle in dem Schlitten vorzusehen. Dabei sind in der Regel für die Aufnahme von Horizontalkräften und Vertikalkräften getrennte Drucktaschen in rechtwinklig zueinander stehenden Flächen angeordnet (GB 2 164 275 B).

Für einen neuen Anwendungsfall ist jeweils wieder eine neue Ausführung der an der Führung beteiligten Elemente erforderlich. Darüberhinaus ist die Bearbeitung aufwendig, da die Aufnahmeböcke und Kanäle und eventuell die Drucktaschen unmittelbar am Schlitten erzeugt werden müssen.

Der Erfindung liegt die Aufgabe zugrunde, eine Lagerung vorzuschlagen, die bei den verschiedensten Einsatzfällen angewendet werden kann, ohne daß eine besondere Anpassung erforderlich ist oder wesentliche Bearbeitungen an dem Schlitten, der gelagert werden soll, auszuführen sind.

Diese Aufgabe wird erfindungsgemäß dadurch gelöst, daß die Führungsschiene im Querschnitt als Mehrkant mit Führungsflächen und einem Befestigungsabschnitt ausgebildet ist, daß das Lagerelement ein separates Bauteil ist, das in einem gesonderten, am Schlitten befestigbaren Tragelement aufgenommen ist, wobei beide zusammen als Baueinheit die Führungsschiene teilweise umschließen und das Lagerelement den Führungsflächen der Führungsschiene zugewandt die Drucktaschen aufweist.

Durch die vorgeschlagene Ausbildung, die Drucktaschen getrennten Lagerelementen zuzuordnen und nicht mehr unmittelbar in dem Schlitten anzubringen, ist es möglich, eine an die verschiedensten Einsatzfälle anpaßbare Lagerung zu schaffen. Es können also standardisierte Tragelemente erstellt werden, die an ebenfalls getrennten und an dem Maschinenbett anzubringenden Führungsschienen entlang bewegbar sind.

Je nach den Auflageverhältnissen können dem zu führenden Schlitten mehrere Tragelemente mit Drucktaschen zugeordnet werden.

Bevorzugt sind zwei in parallelem Abstand zueinander angeordnete Führungsschienen und je Schlitten mindestens drei separate aufgelagerte Tragelemente vorhanden.

Voraussetzung ist, daß die Drucktaschen der verschiedenen Tragelemente untereinander in Verbindung stehen, so daß sich ein gleichmäßiger Druck aufbauen kann und sich gleiche Spielverhältnisse gegenüber den Führungsschienen einstellen können. Aus diesem Grunde ist es nach der Erfindung vorgesehen, daß die Tragelemente mit Anschlüssen für Druckmittelleitungen, die die Drucktaschen der Tragelemente untereinander mit einer Druckquelle verbinden sowie mit in den Drucktaschen mündenden Kanälen versehen sind.

In weiterer Ausgestaltung ist vorgesehen, daß die Führungsflächen des Führungsabschnittes und eine gedachte Verbindungsfläche zwischen diesem und dem Befestigungsabschnitt im Querschnitt ein Sechskant bilden, dessen Führungsflächen von der aus Lagerelement und Tragelement bestehenden Baueinheit überdeckt sind. Bei einer solchen Ausbildung wird eine besonders günstige Aufnahme der Lagerkräfte erreicht.

Bevorzugt ist vorgesehen, daß im Querschnitt die Kantenlängen zweier gegenüberliegender Flächen des Sechskantes, von denen eine die gedachte Verbindungsfläche ist, größer ist als die Kantenlängen der gleichlangen Kanten der restlichen vier Führungsflächen. Hierdurch wird erreicht, daß in einer Richtung eine höhere Auflast übernommen werden kann.

Durch die Ausbildung der Lagerelemente mit den Drucktaschen als separate Bauteile und nachträgliche Verbindung mit den Tragelementen ist es möglich, die Lagerelemente aus einem anderen Werkstoff herzustellen. Es ist dann nach einem weiteren wesentlichen Merkmal der Erfindung vorgesehen, daß das Lagerelement als biegbare Platte geringerer Materialstärke ausgebildet ist und aus einem Trockenlauf Eigenschaften aufweisenden Gleitlagerwerkstoff besteht, in die Drucktasche vor dem Biegen eingeformt ist.

Alternativ ist es möglich, das Lagerelement als Formteil auszubilden. Von Vorteil dabei ist, daß aufgrund der Herstellung eine große wiederholbare Herstellgenauigkeit erreicht wird, da das Formwerkzeug die Toleranzen bestimmt.

Alternativ kann das Lagerelement als Aluminium-Druckgußteil oder als Kunststoffspritzgießteil ausgebildet sein.

Aufgrund der Trennung der Lagerelemente von den Tragelementen ist ein weicherer Werkstoff einsetzbar, der die gewünschten Trockenlaufeigenschaften aufweist. Es kann trotzdem eine gute Führungsqualität aufgrund der Festigkeit und Genauigkeit der Tragelemente erreicht werden.

In weiterer Ausgestaltung ist vorgesehen, daß je Lagerelement eine alle Führungsflächen überdeckende Drucktasche vorgesehen ist.

Es kann jedoch je nach Anwendungsfall auch vorteilhaft sein, wenn das Lagerelement je Führungsfläche der Führungsschiene mindestens zwei Drucktaschen aufweist.

Durch die Ausbildung mit mehreren Taschen wird auch bei einseitiger Auflast ein Ausgleich geschaffen und zwar aufgrund der sich einstellenden Druckerhöhung in der stärker belasteten Drucktasche.

Desweiteren ist nach der Erfindung vorgesehen, daß das Lagerelement auf seiner in dem Tragelement aufgenommenen Außenfläche Verbindungskanäle zum Anschluß der Drucktaschen über Drosselbohrungen an die Druckmittelleitung aufweist.

Ferner ist vorgeschlagen, daß das Lagerelement mit einer im Abstand zum Rand der Drucktasche um diese umlaufend angeordneten, zu den Führungsflächen offenen Sammelnut versehen ist, welche mit einer Sammelleitung verbunden ist.

Für den Fall, daß Druckmittel austritt, wird dieses über die Sammelnut und die Sammelleitung wieder zurückgeführt und kann nach Regenerierung wieder in den Druckmittelkreislauf eingegeben werden. Außerdem können Leckagen durch Messung der rücklaufenden Druckmittelmenge festgestellt werden. Wird die zulässige Menge überschritten, hat sich der Spalt, der sich zwischen den Führungsflächen und der Lauffläche des Lagerelementes eingestellt hat, unzulässig vergrößert. Die Sammelleitung kann beispielsweise an eine Saugpumpe angeschlossen werden, um die Rückführung zu erleichtern.

Zur Vergrößerung des Traganteils der Führungsflächen und der entsprechenden Laufflächen des Lagerelementes kann ferner vorgesehen sein, daß die Führungsschiene im Bereich des Befestigungsabschnittes mit zwei weiteren Zusatzführungsflächen versehen ist, die im Winkel zu den angrenzenden Führungsflächen angeordnet sind.

Bevorzugt ist dabei vorgesehen, daß der eingeschlossene Winkel zwischen den Zusatzführungsflächen und den angrenzenden Führungsflächen maximal 90° beträgt.

Zur Verbesserung der Trageigenschaften und der Führungsqualität ist vorgesehen, daß die Tragfläche der Lauffläche des Lagerelementes in drucklosem Zustand mit Vorspannung an den Führungsflächen anliegt. Eine solche Ausgestaltung ist aufgrund der Trennung der an der Führung beteiligten Bauteile und zwar insbesondere in ein Lagerelement und ein Tragelement möglich. Die für die guten Laufeigenschaften nötige Spalteinstellung kann durch Einlaufen des Lagerelementes gegenüber der Führungsschiene beziehungsweise den Führungsflächen der Führungsschiene erreicht werden. Durch Abnutzung stellen sich die günstigsten Spiele ein.

Eine solche Einlaufeigenschaft ist bei Lösungen nach dem Stand der Technik, bei denen die Drucktaschen unmittelbar jeweils in den Führungsschlitten angebracht sind, nicht möglich, da diese die nötige Festigkeit für die Trageigenschaften insgesamt aufweisen müssen, während bei der Ausbildung nach der Erfindung die nötige Festigkeit durch das Tragelement erreicht wird und das Lagerelement zur Erreichung der optimalen Lagereigenschaften ausgebildet sein kann.

Bevorzugt ist vorgesehen, daß die Drucktaschen einen Flächenanteil von etwa 70 bis 90 % der den Führungsflächen und Zusatzführungsflächen zugewandten Fläche des Lagerelementes einnehmen. Eine solche Ausbildung gewährleistet, daß ein genügend großer Flächenanteil des Lagerelementes zur Verfügung steht, wenn sich die Anordnung in Ruhe befindet, d.h. kein Druck aufgebracht ist.

Durch die umlaufende Taschenausbildung, d.h. dadurch, daß die Tasche sämtliche Führungsflächen überdeckt und nicht unterteilt ist, wird auf jeden Fall gewährleistet, daß zu allen Führungsflächen gleicher Druck herrscht.

Die Montage mit Vorspannung gewährleistet darüber hinaus, daß im Ruhezustand keine Verluste eintreten, die über das normale Maß hinausgehen, da dann, wenn kein Druck anliegt, der Spalt sich verringert und dann, wenn ein Druck auf das Druckmittel aufgegeben wird, das Tragelement sich aufgrund seiner C-förmigen Ausbildung weitet.

In weiterer Ausgestaltung der Erfindung ist ferner vorgesehen, daß das Fertigmaß des Führungsquerschnittes der Lauffläche des Lagerelementes durch Räumen nach Befestigung desselben im dem zugehörigen Tragelement erzeugt ist. Es ist hierdurch möglich, die gewünschten Führungseigenschaften zu erreichen. Das Lagerelement kann zunächst auf ein Ungefähr-Maß hergestellt werden und die nötige Führungsqualität werden nach der Montage der Lagerelemente in dem Tragelement erreicht. Dadurch, daß das Lagerelement aus einem weicheren Werkstoff hergestellt ist, als das Tragelement, ist das Räumen im weichen Werkstoff auch einfacher möglich, als es beispielsweise in einem Schlitten, in dem die Drucktaschen unmittelbar angebracht sind, möglich wäre.

Es können also bessere Führungsqualitäten erreicht werden. Darüber hinaus hat auch das Räumen einen Vorteil insofern, als aufgrund der Bearbeitung entstehende Bearbeitungsriefen in Richtung der Führungsbewegung des Lagerelementes an der Führungsschiene verlaufen, also keine zusätzliche Reibung erzeugen.

Schließlich vereinfacht sich durch diese Ausbildung die Bearbeitung und Herstellung der einzelnen Tragelemente. Es kann auch noch zusätzlich ein weiterer Arbeitsgang erfolgen, bei dem beispielsweise eine spezielle Führungsschiene benutzt wird, um den Führungsquerschnitt und damit die Tragflächenanteile des Lagerelementes im Wege der Kaltumformung zu glätten und zu kalibrieren.

Bevorzugt beträgt die Drucktaschentiefe 0,5 bis 1 mm. Es ist jedoch auch denkbar, einen Vierkant zu wählen, so daß die Führungsschiene als H-Profil gestaltet ist.

Bevorzugte Ausführungsbeispiele der Erfindung sind in der Zeichnung dargestellt und anhand derselben erläutert.

Es zeigt:

Fig. 1 Eine Lagerung mit vier Tragelementen,

Fig. 2 ein einzelnes auf einer Führungsschiene gelagertes Tragelement,

Fig. 3 ein Tragelement mit einer ersten Ausführungsform des Lagerelements,

Fig. 4 eine Führungsschiene,

Fig. 5 eine Abwicklung des Lagerelementes nach Fig. 3,

Fig. 6 eine Anordnung mit Zusatzführungsflächen,

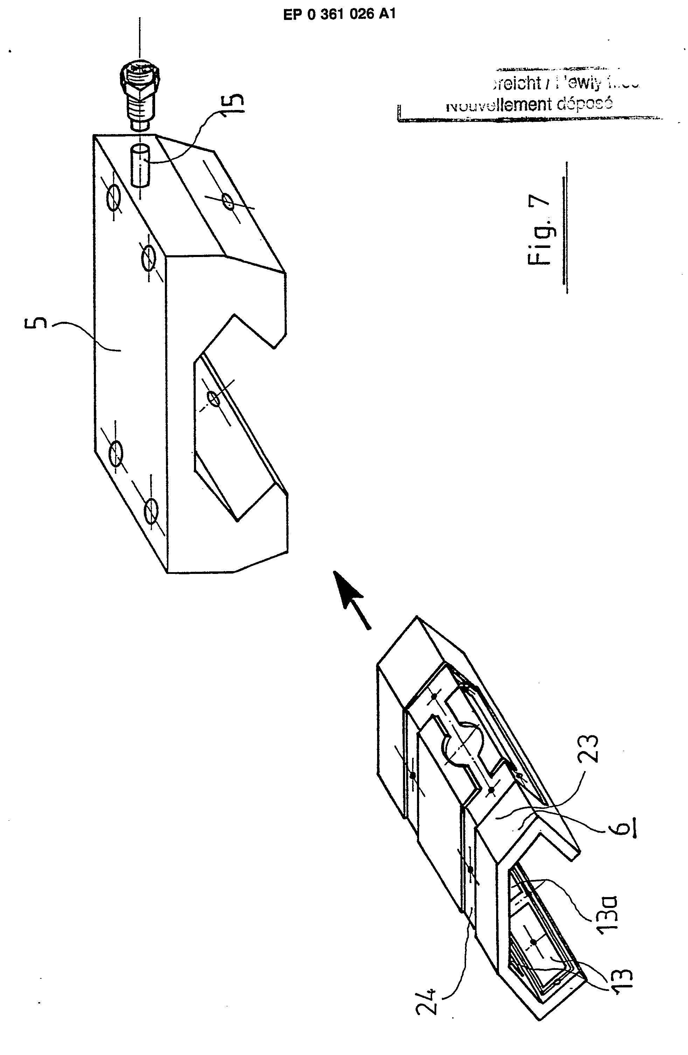

Fig. 7 ein als Formteil ausgebildetes Lagerelement und das zugehörige Tragelement in Explosionsdarstellung,

Fig. 8 eine Abwicklung zum Lagerelement nach Figur 7,

Fig. 9 ein Schnitt A-A gemäß Figur 8,

Fig. 10 eine Abwicklung des Lagerelementes gemäß Figur 7 mit Ansicht auf die Außenfläche, welche einer Draufsicht zu Fig. 5 entspricht.

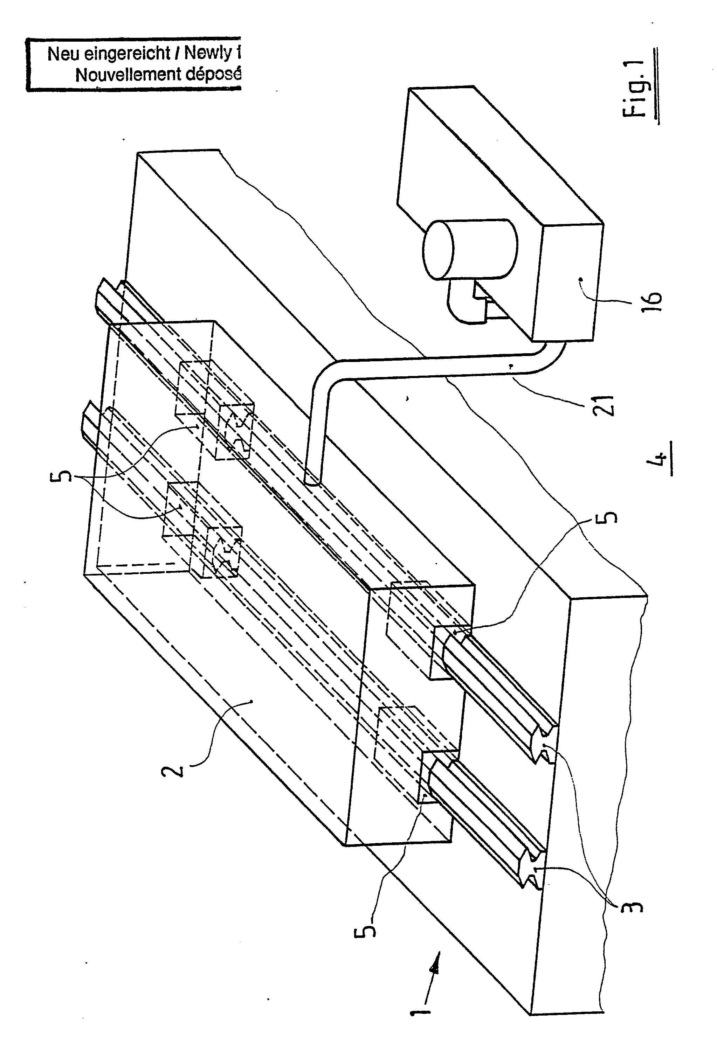

Figur 1 zeigt eine Lagerung 1 eines Schlittens 2, welcher den Werkstückaufnahmetisch beispielsweise einer Fräsmaschine darstellt. Dem Schlitten 2 sind vier Tragelemente 5 zugeordnet, welche entlang den Führungsschienen 3 verschiebbar angeordnet sind. Die Tragelemente 5 sind als jeweils separate hydrostatische Lagerungen ausgebildet, die je nach Belieben in einer größeren oder kleineren Anzahl einem Schlitten 2 zugeordnet werden können.

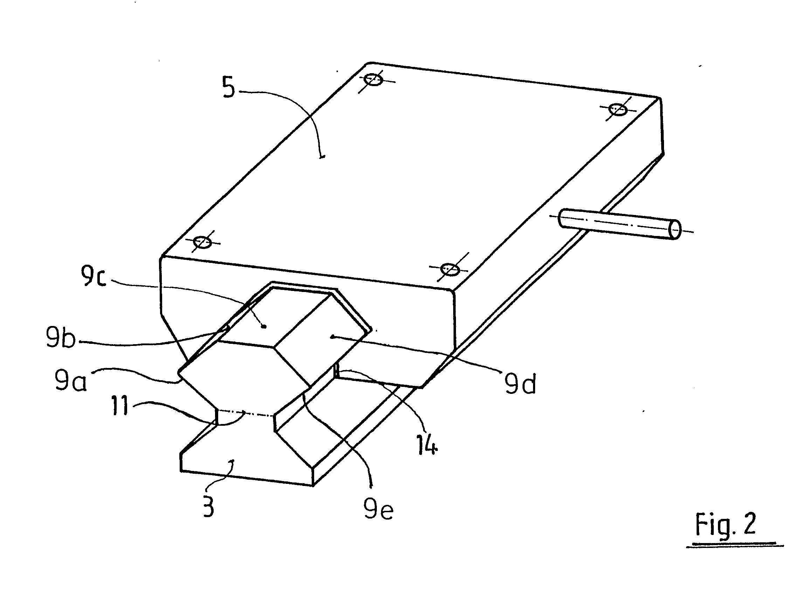

Die einzelnen Tragelemente 5 sind untereinander leitungsmäßig verbunden über eine Druckmittelleitung 21 an eine Druckquelle 16 angeschlossen. Die Ausbildung der einzelnen Tragelemente 5 und der Führungsschienen 3 ist anhand der Figuren 2 bis 6 näher beschrieben.

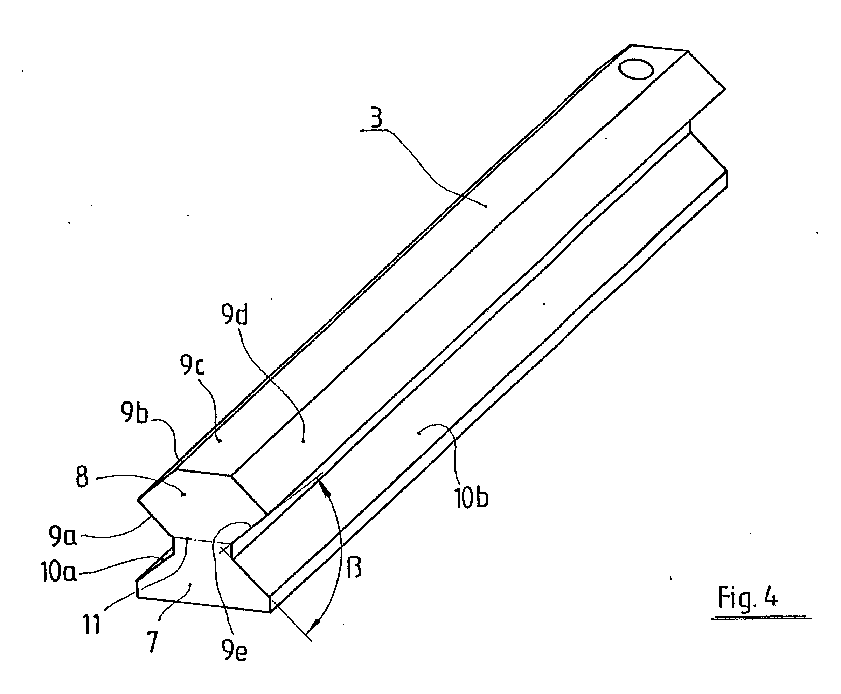

Wie insbesondere aus den Figuren 2 und 4 ersichtlich, besitzt die Führungsschiene 3 einen Führungsabschnitt 8 und einen Befestigungsabschnitt 7. Der Führungsabschnitt 8 umfaßt fünf Flächen. Im Querschnitt gesehen sind die Führungsflächen 9a, 9b, 9c, 9d, 9e Teil eines Sechsecks, wobei die gedachte Verbindungsfläche 11 zwischen Befestigunsabschnitt 7 und Führungsabschnitt 8 im Querschnitt eine Kante des Sechskantes bildet, dem die Führungsfläche 9c gegenüberliegt. Diese beiden Flächen weisen bevorzugt Kantenlängen auf, die größer bemessen sind, als die der übrigen vier Führungsflächen 9a, 9b, 9d und 9e.

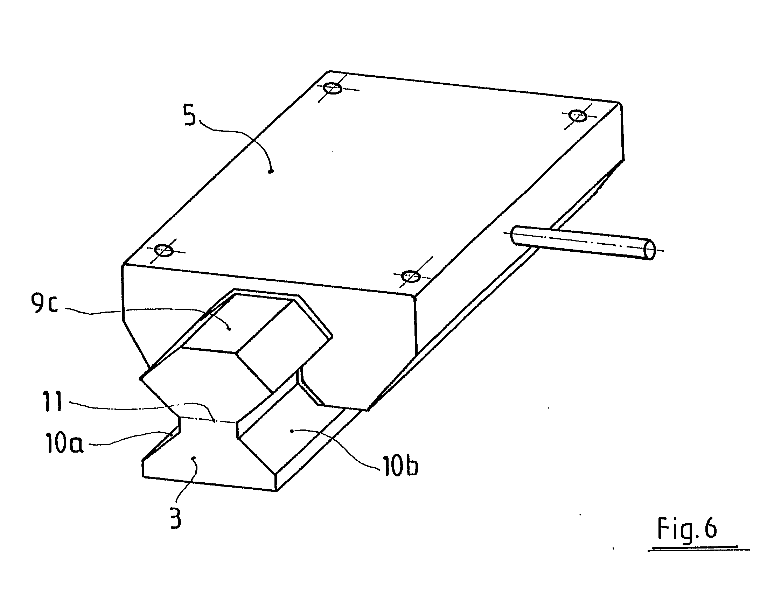

Wie aus Figur 4 und 6 ersichtlich, ist es möglich, auch noch zwei Zusatzführungsflächen 10a, 10b vorzusehen, die unmittelbar am Befestigungsabschnitt 7 angeordnet sind. Diese beiden Zusatzführungsflächen 10a, 10b können unmittelbar an eine der Führungsflächen 9a und 9e angrenzen oder aber mit einer Übergangsfläche beabstandet dazu angeordnet sein. Die einander zugewandten Führungsflächen 9e bzw. 9 a und Zusatzführungsflächen 10b bzw. 10 a schließen einen Winkel ß ein, der maximal 90° beträgt.

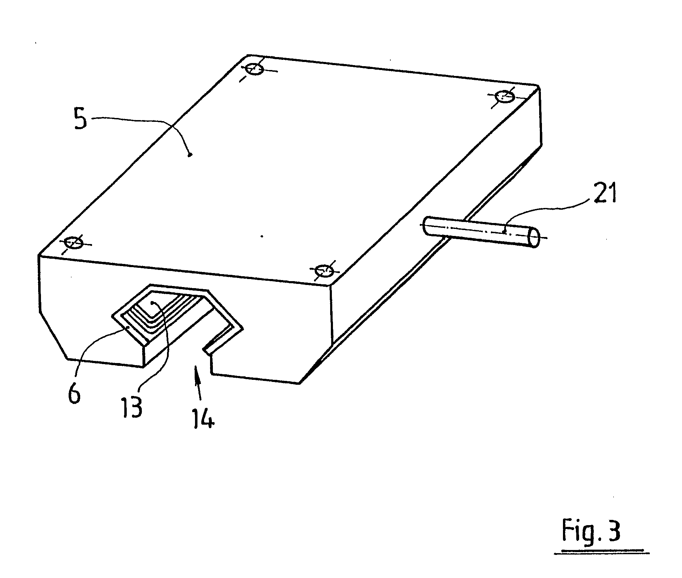

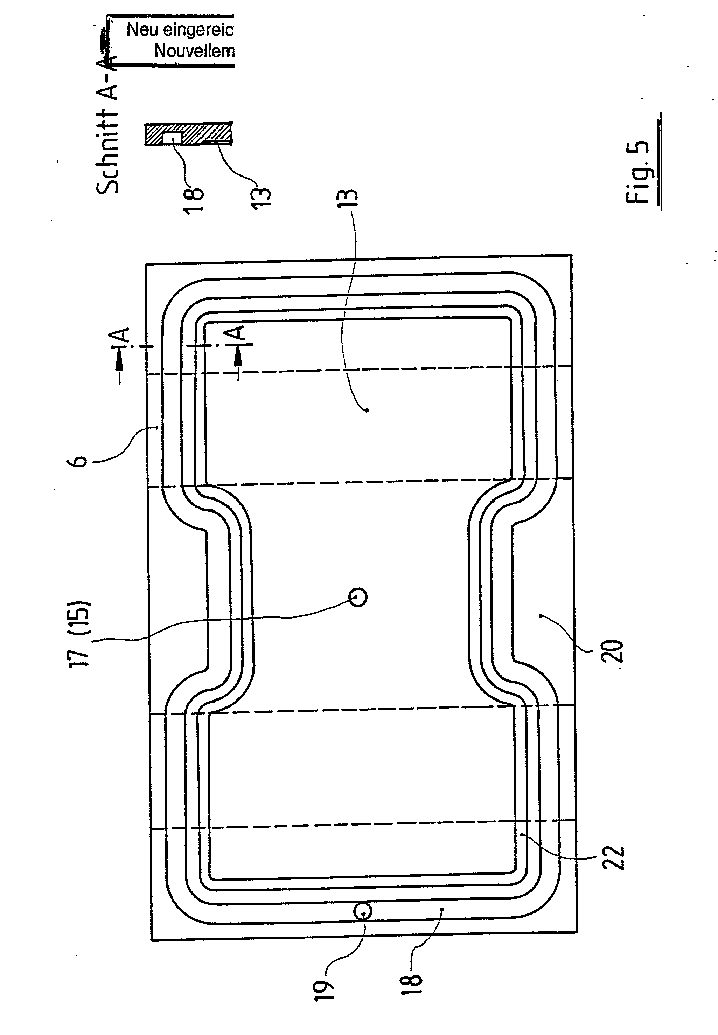

An den Führungsflächen 9a, 9b, 9c, 9d, 9e und den Zusatzführungsflächen 10a und 10b ist jeweils das Tragelement 5 unter Zwischenschaltung von Lagerelementen 6 verschiebbar gelagert. Die Lagerelemente 6 sind von den Tragelementen 5 getrennte Baueinheiten und in diese eingesetzt. Die Tragelemente 5 weisen eine Öffnung auf, die etwa dem zur Führung vorgesehenen Profil der Führungsschiene 3 entsprechend ausgebildet ist, aber mit entsprechend größeren Abmaßen, um das Lagerelement 6 aufzunehmen. Zwei Ausführungen des Lagerelements 6 sind im abgewickelten Zustand in den Figuren 5 bzw. 8 bis 10 dargestellt. Bei der Ausführung nach den Figuren 3 und 5 handelt sich um ein flächiges Gebilde in Form einer Platte dünnerer Materialstärke. Sie ist bevorzugt aus einem Trockenlaufeigenschaften aufweisenden Gleitmaterialwerkstoff hergestellt. Hierzu kann beispielsweise ein Werkstoff verwendet werden, der unter dem Warenzeichen "Permaglide" vertrieben wird und aus einer gesinterten Kupferlegierung besteht, in die Polytetrafluorethylen-Teilchen eingebettet sind.

Das Lagerelement 6 weist eine Vertiefung in Form einer Drucktasche 13 mit einer Tiefe von 0,5 bis 1 mm auf. Die Drucktasche 13 ist von einer Nut 18 umgeben, die im Abstand zum Rand 22 der Drucktasche 13 verläuft. Die Drucktasche 13 des Lagerelementes 6 steht über einen Kanal 17 und die Leitung 15 mit der Druckmittelleitung 21 und über diese mit der Druckquelle 16 sowie den anderen Tragelementen 5 in Verbindung. Durch Beaufschlagung der Drucktasche 13 mit Druckmittel erfolgt die Lastaufnahme über den von der Drucktasche 13 eingenommenen Flächenanteil. Es entsteht ein hydrostatisches Kissen, auf dem die Tragelemente 6 und der von ihnen getragene Schlitten 2 entlang der Führungsschienen 3 und deren Führungsflächen 9, 10 bewegbar sind. Die Drucktasche 13 ist den Führungsflächen 9, 10 zugewandt. Die Restfläche des Lagerelementes 6 dient als Notlauffläche und statisch die Auflast aufnehmende Fläche 20 sowie als Dichtungsfläche. Bevorzugt nimmt die Fläche der Drucktasche 13 einen Anteil von etwa 70% bis 90% an der Gesamtfläche des Lagerelementes 6 ein. Das plattenförmige Lagerelement 6 ist separat hergestellt und wird anschließend so verformt, daß es in die Öffnung des Tragelementes 6 einsetzbar ist und die Führungsflächen 9 und Zusatzführungsflächen 10 zumindest teilweise überdeckt, aber auf der verbleibenden Fläche 20 für eine Abdichtung sorgt.

Wie aus Figur 2 und 3 ersichtlich, lassen das Lagerelement 6 und Tragelement 5 einen Schlitz 14 frei, aus dem der Befestigungsabschnitt 7 der Führungsschiene 3 herausragt. Die getrennte Bauweise von Lagerelement 6 und Tragelement 5 erlaubt eine günstige Herstellung der Lagerlemente 6 und Anpassung an die nötigen Bautoleranzen, um die nötigen Lagerspiele, die für eine mit geringem Druckmittelverlust arbeitende Führung erforderlich sind, bei geringem Fertigungsaufwand. So wird das Lagerelement 6 nach dem Einbringen in das Tragelement 5 durch Räumen an die endgültigen Abmessungen angepaßt. Da ein Räumen in einem relativ weichen Werkstoff durchgeführt wird, ist eine einfache und schnelle Bearbeitung des fertigen Bauteiles möglich. Eventuell entstehende Riefen verlaufen im übrigen in Richtung der Bewegung des Tragelementes 5 an der Führungsschiene 3 und stören wenig. Darüberhinaus tritt auch ein Glätten ein, da der Werkstoff des Lagerelementes 6 weicher ist, als der Grundwerkstoff der Führungsschiene 3, welche zur Aufnahme der Lasten ohne nachteilige Verformung entsprechend starr ausgebildet sein und entsprechende Festigkeiten aufweisen muß. Bevorzugt erfolgt die Bearbeitung durch Räumen so, daß eine Vorspannung entsteht, welche unter Druckbeaufschlagung durch das Druckmittel zumindest teilweise wieder aufgehoben wird, da das Tragelement 5 aufgrund der bügelartigen Kontruktion etwas unter der Belastung aufgeht. Bevorzugt soll sich ein Spiel von wenigen hundertstel Millimetern einstellen. Die aus Figur 5 und dem Teilschnitt ersichtliche Sammelnut 18 dient dazu, aus den Drucktaschen 13 und aus dem Spalt zwischen der Lauffläche 12 und den Führungsflächen 9, 10 der Führungsschiene 3 austretendes Druckmittel aufzufangen und über den Rückfluß 19 wieder zurückzuführen. Der Rückfluß 19 kann mit einer Saugpumpe verbunden sein, so daß im Sammelkanal 18 ein Unterdruck anliegt. Der Druckbereich, der für die Druckbeaufschlagung der Drucktaschen 13 vorgesehen ist, liegt je nach Belastungsfall etwa zwischen 20 und 100 bar.

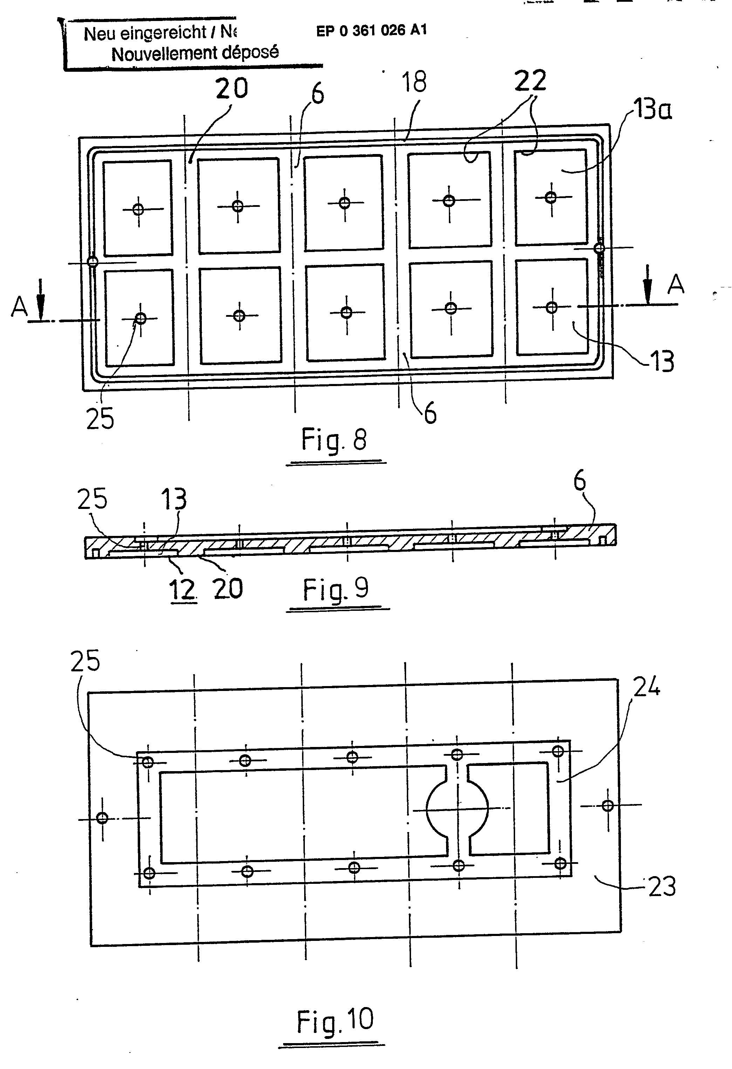

Die Zusatzführungsflächen 10a und 10b sind nicht unbedingt erforderlich, sondern nur dann vorzusehen, wenn eine höhere Lagerkapazität gefordert ist. Die durchgehende Ausbildung der Drucktasche 13, also deren Erstreckung über alle beteiligten Führungsflächen 9, 10, hat den Vorteil, daß eine zentrische Ausrichtung des Tragelementes 5 gegenüber der Führungsschiene 3 erfolgt. Die Montage mit Vorspannung hat den Vorteil, daß auch im Ruhezustand, wenn die Drucktaschen 13 drucklos sind, die Ausrichtung des Schlittens 2 über die Tragelemente 5 beibehalten bleibt und darüberhinaus sich die restlichen Tragflächen 2 eng an die Führungsflächen 9, 10 anlegen. Hierdurch wird verhindert, daß Druckmittel, obwohl drucklos, im Ruhestand austreten kann. Bei der Ausbildungsvariante des Lagerelementes nach den Figuren 8 bis 10 weist die Lauffläche 12 je Führungsfläche 9a-e mindestens zwei Drucktaschen 13, 13a mit einer Tiefe von 0,5 bis 1 mm und die Tragfläche 20, die die Restfläche darstellt, auf.

Die Drucktaschen 13, 13a sind von einer Nut 18 umgeben, die im Abstand zum Rand 22 der Drucktaschen 13, 13a verläuft. Die Drucktaschen 13, 13a des Lagerelementes 6 stehen über Drosselbohrungen 25 und in der Außenfläche 23 eingeformte Verbindungskanäle 24 und die Druckmittelleitung 15 mit den anderen Lagerelementen 6 und über die Druckmittelleitung 21 mit der Druckquelle 16 in Verbindung. Durch Beaufschlagung der Drucktaschen 13, 13a mit Druckmittel erfolgt die Lastaufnahme über den von den Drucktaschen 13, 13a eingenommenen Flächenanteil. Es entsteht ein hydrostatisches Kissen, auf dem die Tragelemente 6 und der von ihnen getragene Schlitten 2 entlang der Führungsschienen 3 und deren Führungsflächen 9, 10 bewegbar sind. Die Drucktaschen 13, 13a sind den Führungsflächen 9a-e zugewandt. Die Restfläche des Lagerelementes 6 dient als Notlauffläche und statisch die Auflast aufnehmende Fläche 20 sowie als Dichtungsfläche. Bevorzugt nimmt die Fläche der Drucktaschen 13, 13a ebenfalls einen Anteil von etwa 70% bis 90% der Gesamtfläche des Lagerelementes 6 ein. Das Lagerelement 6 ist separat als Formteil hergestellt und wird anschließend in die Öffnung des Tragelementes 6 eingesetzt.

Die Drosselbohrungen 25 sorgen für einen verlangsamten Druckausgleich und bewirken einen Rückstelleffekt.

Die Sammelnut 18 dient dazu, aus den Drucktaschen 13 und 13 a und aus dem Spalt zwischen der Lauffläche 12 und den Führungsflächen 9, 10 der Führungsschiene 3 austretendes Druckmittel aufzufangen und zurückzuführen.

Bezugszeichenliste

1 Lagerung
2 Schlitten
3 Führungschiene
4 Maschinengestell
5 Tragelement
6 Lagerelement
7 Befestigungsabschnitt
8 Führungsabschnitt
9 a,b,c,d,e Führungsflächen
10 a,b Zusatzführungsflächen
11 gedachte Verbindungsfläche
12 Lauffläche
13 Drucktasche
14 Schlitz im Tragelement
15 Anschluß für Druckmittelleitung
16 Druckquelle
17 Kanäle
18 Sammelnut
19 Sammelleitung
20 Tragfläche
21 Druckmittelleitung
22 Rand
23 Außenfläche Lagerelement
24 Verbindungskanäle
25 Drosselbohrungen
ß Winkel

**Ansprüche**

1. Hydrostatische Lagerung zur Aufnahme von horizontalen und/oder vertikalen Lagerkräften für einen entlang einer Führungsschiene bewegbaren Schlitten, dem mindestens ein separates Lagerelement zugeordnet ist, das mit zumindest einer Drucktasche versehen ist, welche der Führungsfläche der Führungsschiene zugewandt und mit einer Druckmittelleitung verbunden ist, welche über Leitungen von einer Druckquelle mit Druckmittel versorgbar ist, dadurch gekennzeichnet, daß die Führungsschiene (3) im Querschnitt als Mehrkant mit Führungsflächen (9a-e) und einem Befestigungsabschnitt (7) ausgebildet ist, daß das Lagerelement (6) ein separates Bauteil ist, daß in einem gesonderten, am Schlitten (2) befestigbaren Tragelement (5) aufgenommen ist, wobei beide zusammen als Baueinheit die Führungsschiene (3) teilweise umschließen und das Lagerelement (6) den Führungsflächen (9a-e) der Führungsschiene (3) zugewandt, die Drucktaschen (13, 13a) aufweist.

2. Lagerung nach Anspruch 1, dadurch gekennzeichnet, daß zwei im parallelen Abstand zueinander angeordnete Führungsschienen (3) und je Schlitten (2) mindestens drei separat darauf gelagerte Tragelemente (5) vorhanden sind.

3. Lagerung nach Anspruch 2, dadurch gekennzeichnet, daß die Führungsflächen (9a, b, c, d, e) des Führungsabschnittes (8) und eine gedachte Verbindungsfläche (11) zwischen diesem und dem Befestigungsabschnitt (7) im Querschnitt einen Sechskant bilden, dessen Führungsflächen (9a,b,c,d,e) von der aus Lagerelement (6) und Tragelement (5), bestehenden Baueinheit überdeckt sind.

4. Lagerung nach Anspruch 1, dadurch gekennzeichnet, daß die Tragelemente (5) mit Anschlüssen (15, bzw. 24) für Druckmittelleitungen (21), die die Drucktaschen (13, 13 a) der Tragelemente untereinander und mit einer Druckquelle (16) verbinden sowie mit in den Drucktaschen (13, 13 a) mündenden Kanälen (17 bzw. 25) versehen sind.

5. Lagerung nach Anspruch 3, dadurch gekennzeichnet, daß im Querschnitt die Kantenlängen zweier gegenüberliegender Flächen (9c, 11) des Sechskantes, von denen eine die gedachte Verbindungsfläche (11) ist, größer ist als die Kantenlängen der gleichlangen Kanten der restlichen vier Führungsflächen (9a, b, d, e).

6. Lagerung nach Anspruch 1, dadurch gekennzeichnet, daß das Lagerelement (6) als biegbare Platte geringerer Materialstärke ausgebildet ist und aus einem Trockenlaufeigenschaften aufweisenden Gleitlagerwerkstoff besteht, in die die Drucktasche (13) vor dem Biegen eingeformt ist.

7. Lagerung nach Anspruch 1, dadurch gekennzeichnet, daß das Lagerelement (6) als Formteil ausgebildet ist.

8. Lagerung nach Anspruch 7, dadurch gekennzeichnet, daß das Lagerelement (6) als Aluminium-Druckgußteil ausgebildet ist.

9. Lagerung nach Anspruch 7, dadurch gekennzeichnet, daß das Lagerelement (6) als Kunststoff-Spritzgußteil ausgebildet ist.

10. Lagerung nach Anspruch 1, dadurch gekennzeichnet, daß je Lagerelement (6) eine alle Führungsflächen (9, 10) überdeckende Drucktasche (13) vorgesehen ist.

11. Lagerung nach Anspruch 1, dadurch gekennzeichnet, daß das Lagerelement (6) je Führungsfläche (9a-e) der Führungsschiene (3) mindestens zwei Drucktaschen (13, 13 a) aufweist.

12. Lagerung nach Anspruch 1,
dadurch gekennzeichnet,
daß das Lagerelement (6) auf seiner in dem Tragelement (5) aufgenommenen Außenfläche (17) Verbindungskanäle (19) zum Anschluß der Drucktaschen (13, 13a) über Drosselbohrungen (18) an die Druckmittelleitung (15) aufweist.

13. Lagerung nach Anspruch 1.
dadurch gekennzeichnet,
daß das Lagerelement (6) mit einer im Abstand zur Randkante (22) der Drucktasche (13) um diese umlaufend angeordnete zu den Führungsflächen (9, 10) offenen Sammelnut (18) versehen ist, welche mit einer Sammelleitung (19) verbunden ist.

14. Lagerung nach Anspruch 1,
dadurch gekennzeichnet,
daß die Führungsschiene (3) im Bereich des Befestigungsabschnittes (7) mit zwei weiteren Zusatzführungsflächen (10a, 10b) versehen ist, die im Winkel (ß) zu den angrenzenden Führungsflächen (9a, 9e) angeordnet sind.

15. Lagerung nach Anspruch 14,
dadurch gekennzeichnet,
daß jeweils eine Zusatzführungsfläche (10a, 10b) und die angrenzende Führungsfläche (9a, 9b) einen Winkel (ß) von maximal 90° zwischen sich einschließen.

16. Lagerung nach den Ansprüchen 1 oder 14,
dadurch gekennzeichnet,
daß die Tragfläche (20) der Lauffläche (12) des Lagerelementes (6) in drucklosem Zustand mit Vorspannung an den Führungsflächen (9, 10) anliegt.

17. Lagerung nach Anspruch 1,
dadurch gekennzeichnet,
daß die Drucktaschen (13, 13a) einen Flächenanteil von etwa 70 % bis 90 % der den Führungsflächen (9) und Zusatzführungsflächen (10) zugewandten Fläche des Lagerelementes (6) einnehmen.

18. Lagerung nach einem oder mehreren der vorangehenden Ansprüche,
dadurch gekennzeichnet,
daß das Fertigmaß des Führungsquerschnittes der Lauffläche (12) des Lagerelementes (6) durch Räumen nach Befestigung desselben im zugehörigen Tragelement (5) erzeugt ist.

19. Lagerung nach einem oder mehreren der vorangehenden Ansprüche,
dadurch gekennzeichnet,
daß die Drucktaschen (13) 0,5 bis 1 mm tief sind.

Fig.1

Fig. 2

5

1

9d

14

9e

3

9c

9b

9a

11

Fig. 3

Fig. 4

17 (15)

6

Schnitt A-A

A

18

A

13

19

13

18

22

20

EP 0 361 026 A1

Fig. 5

Fig. 6

EP 0 361 026 A1

Fig. 7

20    6    18    22    13a

A    A

25    13

Fig. 8

25    13    6

12    20    Fig. 9

25    24

23

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 080 009 (S.M. MARATHE et al.) * Spalte 5, Zeile 33 – Spalte 6, Zeile 39; Figuren 1-4b * --- | 1 | F 16 C 29/02 |
| D,A | US-A-4 506 935 (H. SUZUKI et al.) * Insgesamt * --- | 1 | |
| A | DE-A-2 847 882 (S. GEIGER) ----- | | |

RECHERCHIERTE SACHGEBIETE (Int. Cl.5)

F 16 C
B 23 Q

Der vorliegende Recherchenbericht wurde für alle Patentansprüche erstellt

| Recherchenort | Abschlußdatum der Recherche | Prüfer |
|---|---|---|
| DEN HAAG | 19-12-1989 | BEGUIN C.P. |

EPO FORM 1503 03.82 (P0403)